# EUROPEAN PATENT SPECIFICATION

(11) **EP 0 755 875 B1**
(45) Date of publication and mention of the grant of the patent: **10.03.1999**
(21) Application number: 96110392.6
(22) Date of filing: 27.06.1996
(51) Int. Cl.: B65D 81/20, B65B 9/20, B65B 31/04

(54) **Manufacturing process of packages**
Herstellungsverfahren von Packungen
Procédé de fabrication d'emballages

(30) Priority: 30.06.1995 JP 188549/95
(43) Date of publication of application: 29.01.1997
(73) Proprietor: ORIHIRO CO., LTD., Takasaki-shi, Gunma-ken (JP)
(72) Inventor: Yamauchi, Yoshio, Abiko-shi, Chiba-ken (JP)
(74) Representative: Hering, Hartmut, Dipl.-Ing.

(56) References cited:
- EP-A- 0 190 776
- EP-A- 0 385 677
- GB-A- 672 891
- GB-A- 2 187 702
- US-A- 2 160 367

## Description

This invention relates to a manufacturing process of packages for containing meat, raw ham or other packed items susceptible to discoloring and degeneration.

In US 2 160 367 A there is disclosed a manufacturing process of packages according to the preamble of claim 1.

From GB 2 187 702 A or EP 0 385 677 A there is known a package comprising a bag made from flexible superimposed double film with a space between the oxygen-barrier outside film and the permeable-to-oxygen inside film in which discolouring and degenerative items for packing and a mixed gas composed of oxygen and a bacteriostatic gas are hermetically enclosed. In the package known from GB 2 187 702 A the mixed gas preferably contains 20 % of CO₂.

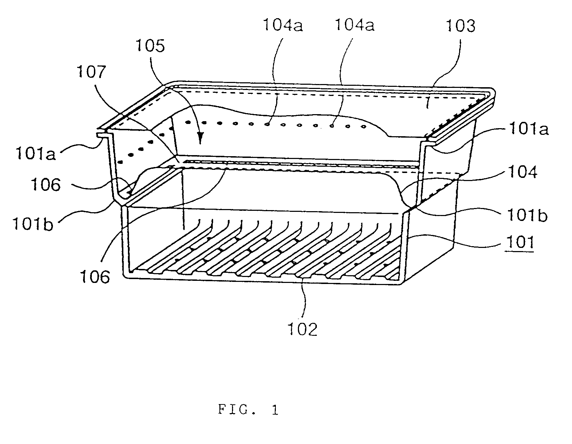

Traditionally as a package effective to prevent the discoloration and degeneration of meat, raw ham and other packed items susceptible to discoloring and degeneration, plastic packages as illustrated in Fig. 1 have been proposed.

These plastic packages are packed with meat, or other items, by loading it on a tray 102 disposed at the bottom of a box-form base 101 provided with an upper lip 101a and a lower lip 101b, said meat being covered with a skin 104 partially sealed by the upper lip 101a and the lower lip 101b of the base 101, the open surface of the base 101 being sealed with a lid 103, and the space 105 formed between the skin 104 and the lid 103 being filled with a mixed gas so that said mixed gas may pass through multiple openings 104a created in the skin 104 (JP-A-No. Hei-2-500355).

However, said prior art requiring the manufacture of bases or trays as preliminary process of packing involves a large number of steps increasing the packing cost.

In addition, because of their shape preserving property, the bases and trays are bulky and inconvenient when they are to be disposed of after use.

The main object of the invention is to provide a manufacturing process of packages that enables to maintain the color tone and quality of discoloring and degenerative items, in other words to improve the quality preserving property of such items and to reduce packing costs.

According to the present invention there is provided a manufacturing process of packages as set out in claim 1.

Because a bag made of flexible superimposed double, film formed by laying the oxygen-barrier outside film on top of the inside permeable-to-oxygen film, with a space in between contains hermetically a discoloring and degenerative item or items for packing and a mixed gas composed of air and a bacteriostatic gas, air contained in the mixed gas prevents the packed item from discoloring and degenerating so that the item for packing may maintain a good appearance and color tone. In addition, the bacteriostatic gas contained in the mixed gas inhibits any increase in the number of germs within the packed item thus preventing the degeneration of the packed item.

The results of experiments conducted by the inventor reveal, furthermore, that when meat and any other packed item covered in close contact with a single-layer film or a laminate film working as a barrier to oxygen, the surface of the packed item in close contact is denied contact with air and that only the surface part discolors, and thus such film is not desirable as a packing material for consumer goods.

This invention prevents the packed item from getting into direct contact with an oxygen-barrier film and the presence of a permeable-to-oxygen film can prevent any change in color.

Moreover, as bags are not bulky, they can be easily disposed of after their use.

### BRIEF DESCRIPTION OF THE DRAWING

Fig. 1 is a bird's eye view of the cross section of the traditional plastic package.
Fig. 2(a) is a bird's eye view of an embodiment of the package obtained by the process of this invention.
Fig. 2(b) is a partial cross section of the package shown in Fig. 2(a).
Fig. 3 is a view illustrating the superimposed double film used for the manufacture of the package obtained by the process of this invention and its original roll film.
Fig. 4 is a view illustrating the first embodiment of the manufacturing process of this invention.
Fig. 5 is a view illustrating the second embodiment of the manufacturing process of this invention.

The embodiments of this invention are described below with drawings.

First of all, an embodiment of the package obtained by the process of this invention is described.

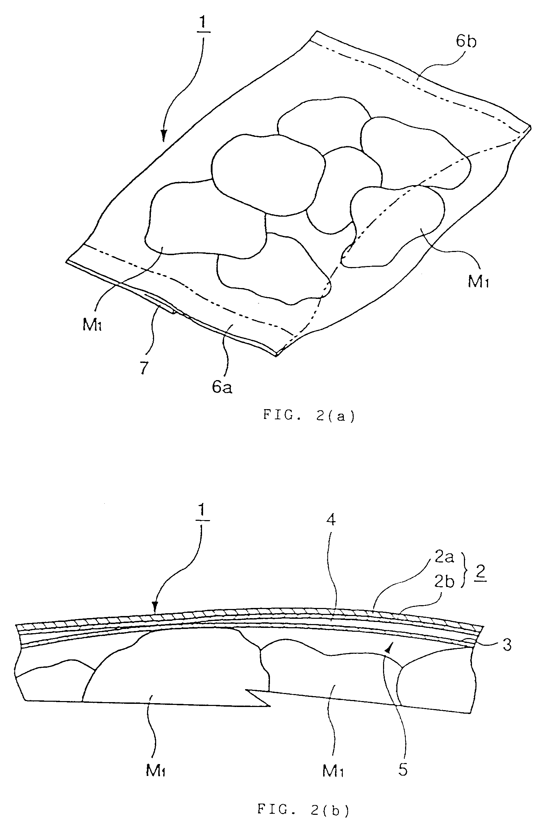

As shown in Figs. 2(a) and 2(b), the package 1 of this embodiment comprises a bag made of a flexible superimposed double film formed by laying the oxygen-barrier outside film serving 2 on top of the permeable-to-oxygen inside film 3 with a space 4 in between in which meat, raw ham or other discoloring and degenerative item for packing M1 as well as a mixed gas consisting of air and a bacteriostatic gas are hermetically contained, the superimposed portion on both edges of said superimposed double film being heat sealed while the inside film 3 is kept inside to form the back seal portion 7 of a cylinder, and the openings on both ends of the cylinder being heat sealed to form the terminal seal portions 6a and 6b.

In this embodiment, the mixed gas consisting of oxygen and a bacteriostatic gas contained in the package can permeate said inside film 3 to circulate between the space 5 within the inside film 3 and said gap 4 so that the discoloring and degenerative packed item M1 may always be exposed to a mixed gas composed of oxygen and a bacteriostatic gas.

The oxygen-barrier outside film 2 consists of a double-layer film formed by laying a heat sealable layer 2b with a good heat sealability on the inside and an oxygen-barrier layer 2a with a good oxygen barrier characteristic on the outside. And the inside film 3 consists of a single-layer permeable-to-oxygen and heat sealable film.

The oxygen-barrier layer 2a forming the outside film 2 is made of a film consisting of polyamide, polyester (PET), polyvinyl alcohol (PVA), polyvinyl chloride (PVC), polyvinyldene chloride (PVDC), ethylene-vinyl acetate copolymer (EVA), ethylene vinyl alcohol (EVCO), etc.

The heat sealable layer 2b and the inside film 3 are made of a permeable-to-oxygen and heat sealable film consisting of low density polyethylene (LDPE), linear low density polyethylene (L-LDPE), ethylene-α-olefin copolymer, unsaturated carboxylic acid denatured polyethylene, high density polyethylene, etc. As for the inside film 3, on the other hand, even when materials other than those mentioned above are used, the perforation of holes or slits or the use of permeable nonwoven fabrics can result in permeability to oxygen.

And if said outside film 2 and the inside film 3 are transparent, the packed item M1 contained in the bag can be seen.

If a mixed gas containing oxygen to be hermetically contained together with the item for packing M1 in the package 1 consists of 60%-80% oxygen gas (O₂), good for maintaining the color of meat, and 20%-40% of carbonic acid gas (CO₂) or nitrogen gas (N₂), effective for preserving the quality of meat, in other words effective for restraining the growth of bacteria, the maintenance of color and quality, in other words the quality maintenance property of the packed item M1 improves.

Now, the manufacturing process of this invention will be described below.

### (The first embodiment)

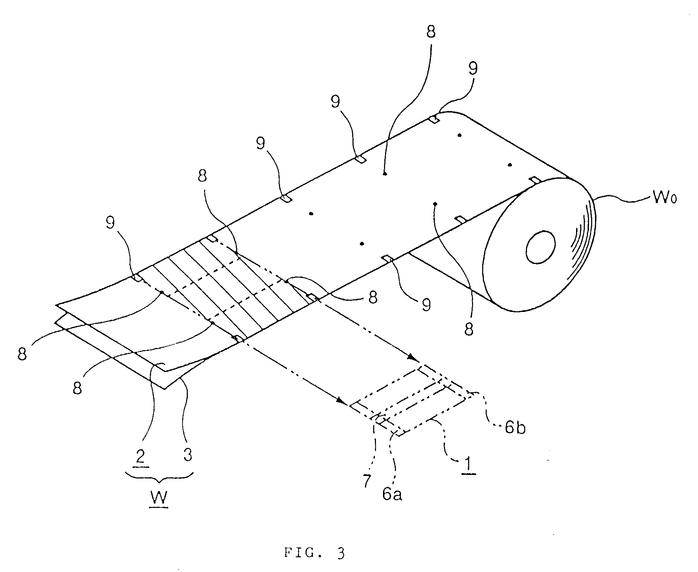

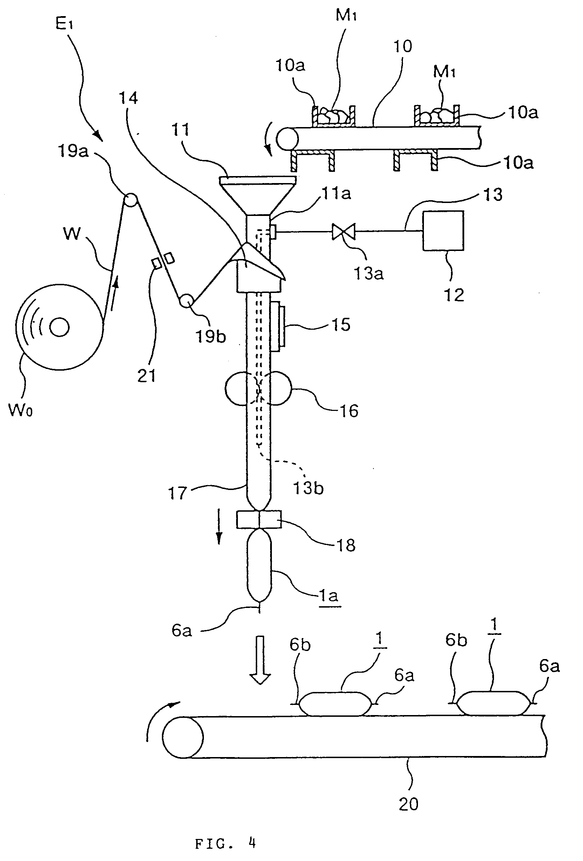

(1) As illustrated in Fig. 3, the oxygen barrier outside film 2 is laid on top of the permeable-to-oxygen inside film 3 and certain fixed parts are partially heat sealed to form partially sealed parts 8 and thus the original roll film W0 of flexible superimposed double film W with a space 4 between the the outside film 2 and the inside film 3 is prepared in advance.
   Now, when the partially sealed parts are formed almost on the same lines as those linking the register marks 9 marked at regular intervals along the edges on both sides of the superimposed double film W, and when the terminal sealed parts 6a and 6b of the package 1 are formed on the lines linking these register marks 9 and the partially sealed parts 8, the portion of the package 1 in which the packed item is enclosed leaves no partially sealed part 8. As a result, the appearance of the package 1 improves and at the same time no sealed portions remain in areas other than said back sealed portion of the storage portion of the packed item of the bag consisting of said superimposed double films W improving the fluidity of said mixed gas composed of oxygen and a bacteriostatic gas.
(2) Said original roll of film W0 is set on a longitudinal pillow packing machine E1 shown in Fig. 4 to start a preliminary operation leading to the regular operation described below.
   The longitudinal pillow packing machine E1 shown in Fig. 4 keeps during its regular operation the packages 1a before separation as manufactured in the previous cycle in an unseparated state.
(3) After the preliminary operation mentioned in (2) above, the regular operation starts. During this regular operation, the superimposed double film W drawn from a plurality of feed rolls 19a and 19b pass through a register mark sensor 21 where register marks 9 are counted and then pass through a former 14 where the double film W is folded into a cylinder with the inside film 3 being kept inside and the edges on both ends are laid on top of each other to form a superimposed part, which part is heat sealed while passing through a back sealing machine 15 to form a cylinder 17 with a back sealed part 7 formed thereon. Into this cylinder 17 is inserted a nozzle 13b linked through a valve 13a with a mixed gas supply pipeline 12 connected with a mixed gas tank 12, and through this nozzle 13b the mixed gas composed of oxygen and a bacteriostatic gas is constantly introduced.
(4) When the condition is as described in the step (3) above, the bucket 10a of the bucket conveyor 10 reverses its course in the direction indicated by the arrow and the packed item M1 of a fixed quantity within the bucket 10a is thrown down into the hopper 11 to fall naturally into the bottom of the cylinder 17 through the supply pipe 11a leading to the lower end of the hopper 11.
(5) After the step (4) described above, a horizontal sealer/cutter 18 descends in the direction shown by the arrow and at the same time a feed roll 16 rotates causing a package before separation 1a and a cylinder 17 followed by sumperimposed double film W to advance by a cycle.
(6) After the step (5) described above, the horizontal sealer/cutter 18 is opened and a package 1a manufactured in the previous cycle and just before separation is separated to form a complete package 1 and falls naturally upon the conveyor 20 to be discharged.
(7) After the step (6) described above, the horizontal sealer/cutter 18 in an open state is lifted to its original position and is closed at this position. This movement causes the terminal sealed part backward in the direction of progress 6b to be formed and the terminal sealed part forward in the direction of progress 6a to be formed, and at the same time the middle part of the two is cut off to return to the state of the step (2) above. And this is the end of a cycle.

### (second embodiment)

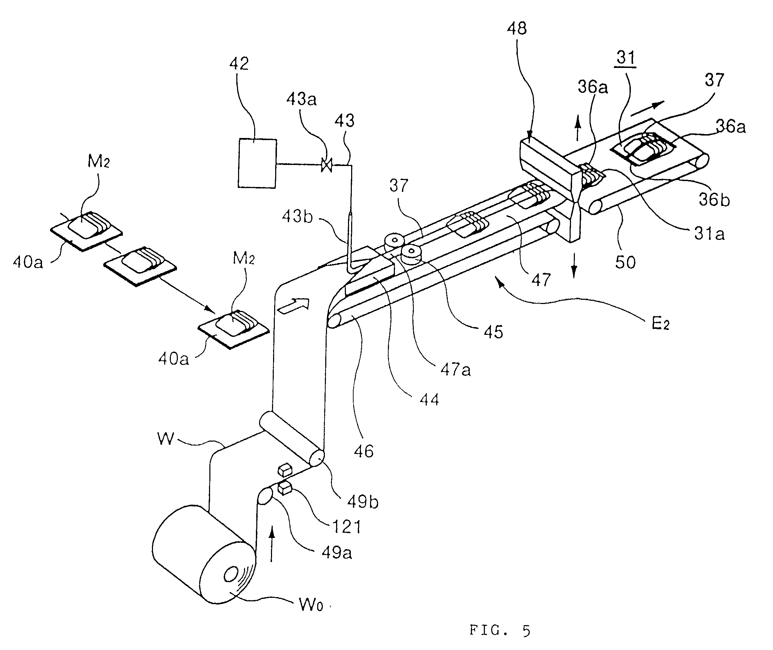

As to manufacture packages for containing discoloring and degenerative items for packing such as sliced meat or ham in an orderly arrangement, a transversal pillow packing machine as shown in Fig. 5 is used.
(1) To begin with, like the step (1) of the first embodiment of the manufacturing process of said package, an original roll of film W0 of superimposed double film W must be prepared (In Fig. 5, register marks and partially sealed portions are not shown).
(2) Said original roll of film W0 is set in the transversal pillow packing machine E2 to start a preliminary operation leading to the regular operation described below.
   The transversal pillow packing machine shown in Fig. 5 shows during the regular operation the unseparated state of packages 31a manufactured during the previous cycle and before separation.
(3) After the preliminary operation described in (2) above, the regular operation starts. During this regular operation, the superimposed double film W drawn out by a plurality of feed rolls 49a and 49b pass through a register mark sensor 121 where register marks are counted and then pass through a former 44 where the double film W is folded into a cylinder with the inside film 3 being kept inside and the edges on both ends are laid on top of each other to form a superimposed part.
   At this time, the packed items M2 for a package loaded in advance in an orderly arrangement respectively on each tray 40a are transferred by a robot or other means not shown in the figure as they are arranged on the superimposed double film W just before entering into the former 44. This transfer of packaged items M2 is carried out at a fixed timing, and the items M2 for packaging are loaded on the sumperimposed double films W at the fixed intervals.
(4) The superimposed double film W folded after passing through the former 44 are sealed on their superimposed part 74a by a back sealing machine 45 with a pair of rolls for sealing to form the back sealed part 37 and become a cylinder 47. Into this cylinder 47 is inserted a nozzle 43b leading to a mixed gas supply pipeline 43 connected through a valve 43a with a mixed gas tank 42, and through the nozzle 43b a mixed gas composed of oxygen and a bacteriostatic gas is constantly introduced.
(5) After the step (4) described above, a transversal sealer/cutter 48 opening and closing in the direction shown by the arrow in the figure and in the reverse direction is closed in the direction contrary to that of the arrow. This results in the formation of the rear terminal sealed part 36a in the direction of progress of packages 31a and the front terminal sealed part 36b in the direction of progress of packages of the following cycle and at the same time the terminal sealed parts 36a and 36b are cut off in the middle.
(6) After the step (5) described above, the transversal sealer/cutter 48 is opened in the direction shown by the arrow and the rotary movement in the direction shown by the arrow of the conveyor 50 separates the packages 31 which are then discharged.

The constitution of this invention as described above produces the following effects.

As no trays are required, the manufacturing costs of packages are reduced.

A mixed gas composed of oxygen and a bacteriostatic gas permeates the inside film permeable to oxygen to circulate through the space existing between this inside film and the oxygen-barrier outside film and the space within the inside film where discoloring and degenerative packed items are enclosed so that the surface of the discoloring and degenerative packed items is always exposed to a gas containing fresh oxygen. As a result, said packed items are prevented from discoloring and degenerating, and the maintenance of color and quality in a fresh state, in other words quality preservation property improves. In addition, the use of flexible sumperimposed double films for the construction of the bag makes the package less bulky and facilitates their disposal after use.

## Claims

1. A manufacturing process of packages comprising:
a step of using a pillow packing machine (E1) to fold cylindrically a superimposed double film (W) while keeping an inside film (3) thereof inside, to seal the superimposed part resulting from the superimposition of the edges on both sides and to form thus a cylinder (17),
a step of enclosing discoloring and degenerative items for packing within said cylinder (17) and filling a mixed gas composed of oxygen and a bacteriostatic gas into the cylinder (17), and
a step of sealing the openings of said cylinder (17) to hermetically enclose said packed items and said mixed gas therein,
**characterized by** a step of preparing in advance flexible superimposed double film (W) with a space (4) in between by laying the oxygen-barrier outside film (2) on top of the permeable-to-oxygen inside film (3) and sealing them partially.

2. The manufacturing process of packages according to claim 1, wherein the partial seal of said superimposed double film (W) is made at fixed intervals along the length of said superimposed double film (W) and the openings of said cylinder (17) are sealed at the portions where said partial seals are made.

## Patentansprüche

1. Verfahren zur Herstellung von Verpackungen, welche folgendes aufweist:
einen Schritt zum zylindrischen Falten einer übereinander gelegten Doppelfolie (W) unter Einsatz einer stehenden Verpackungsmaschine (E1), währenddem eine innenseitige Folie (3) hiervon auf der Innenseite gehalten wird, um das übereinander gelegte Teil, welches man durch das Übereinanderlegen der Ränder auf beiden Seiten erhält, zu versiegeln und hierdurch einen Zylinder (17) auszubilden,
einen Schritt zum Umschließen von farbveränderbaren und unansehlich werdenden Gegenständen zum Abpacken in dem Zylinder (17) und zum Einfüllen eines Gasgemisches aus Sauerstoff und einem bakteriostatischen Gas in den Zylinder (17) und
einen Schritt zum Verschließen der Öffnungen des Zylinders (17), um die abgepackten Gegenstände und das eingefüllte Gasgemisch hermetisch zu umschließen, **gekennzeichnet**, durch einen Schritt, bei dem im voraus die flexible, übereinandergelegte Doppelfolie (W) mit einem Raum (4) dazwischen dadurch versehen wird, daß die sauerstoffsperrende, außenseitige Folie (2) auf die Oberseite der für Sauerstoff durchlässigen, innenseitigen Folie (3) gelegt wird und diese teilweise gesiegelt werden.

2. Verfahren zur Herstellung von Verpackungen nach Anspruch 1, bei dem die teilweise Siegelung der übereinander gelegten Doppelfolie (W) in fest vorgegebenen Intervallen entlang der Längserstreckung der übereinander gelegten Doppelfolie (W) erstellt wird und die Öffnungen des Zylinders an den Teilen verschlossen werden, an denen die teilweisen Siegelungen erstellt wurden.

## Revendications

1. Procédé de fabrication pour des emballages, comprenant :
une étape consistant à utiliser une machine d'emballage à coussin (E1) pour replier sous forme cylindrique un film double superposé (W) tout en maintenant à l'intérieur de celui-ci un film interne (3), à souder la partie superposée qui résulte de la superposition des bords sur les deux côtés, et à former ainsi un cylindre (17),
une étape consistant à enfermer des articles de décoloration et de dégénération afin de les emballer à l'intérieur dudit cylindre (17), et à remplir un mélange de gaz composé d'oxygène et d'un gaz bactériostatique à l'intérieur du cylindre (17), et
une étape consistant à souder les ouvertures dudit cylindre (17) afin d'enfermer de façon hermétique lesdits articles emballés et ledit mélange de gaz à l'intérieur,
caractérisé par une étape consistant à préparer à l'avance un film double souple superposé (W) avec un espace (4) intermédiaire, en posant le film extérieur formant barrière à l'oxygène (2) dessus le film intérieur perméable à l'oxygène (3), et à les souder partiellement.

2. Procédé de fabrication d'emballage selon la revendication 1, dans lequel la soudure partielle dudit film double superposé (W) est réalisée à des intervalles fixes le long de la longueur dudit film double superposé (W), et les ouvertures dudit cylindre (17) sont soudées au niveau des parties où lesdites soudures partielles sont réalisées.
